# EUROPÄISCHE PATENTSCHRIFT

(11) **EP 0 855 609 B1**
(45) Veröffentlichungstag und Bekanntmachung des Hinweises auf die Patenterteilung: **23.04.2008**
(21) Anmeldenummer: 97122653.5
(22) Anmeldetag: 22.12.1997
(51) Int. Cl.: G02B 6/32, F21V 8/00, G02B 23/24

(54) **Optisches element**
Optical element
Elément optique

(30) Priorität: 15.01.1997 AT 5497
(43) Veröffentlichungstag der Anmeldung: 29.07.1998
(73) Patentinhaber: Photonic Optische Geräte Gesellschaft m.b.H. & Co. KG, 1160 Wien (AT)
(72) Erfinder: Zehetner, Helmut, 2201 Gerasdorf (AT)
(74) Vertreter: Stocker, Kurt

(56) Entgegenhaltungen:
- GB-A- 2 286 899
- US-A- 4 721 359
- US-A- 4 733 937
- US-A- 4 929 070
- US-A- 5 193 135

## Beschreibung

Die Erfindung betrifft ein optisches Element mit Zonen unterschiedlicher Krümmung zur Vermeidung geringer Helligkeit im zentralen Beleuchtungsbereich einer Beleuchtungseinrichtung mit Kaltlichtspiegellampe, deren Licht einem faseroptischen Lichtleiter zugeführt ist.

Kaltlichtspiegellampen besitzen einen Reflektor durch dessen zentralen Bereich der Lampensockel durchgeführt ist. Der Glaskolben der Lampe selbst weist an seinem vom Reflektor entfernten Ende einen Abschmelzzapfen auf. Diese bauliche Ausgestaltung der Spiegellampe beeinflußt in nachteiliger Weise die Abstrahlcharakteristik der Lampe in der Form, daß die Lichtintensität im zentralen Bereich deutlich geringer als in von der optischen Achse weiter weggelegenen Bereichen ist. Wird das von der Spiegellampe abgestrahlte Licht über einen beispielsweise faseroptischen Lichtleiter an ein zu beleuchtendes Objekt geführt, so tritt an der Austrittsfläche dieses Lichtleiters im Prinzip die gleiche Charakteristik der Verteilung der Lichtintensität auf. Der maximale Winkel der Lichtabstrahlung am Lichtaustritt des Lichtleiters ist durch die numerische Apertur der Glasfaser exakt begrenzt.

Der Raumwinkel der Lichtstrahlung von oben beschriebenen Spiegellampen beträgt ca.70°, und es werden Glasfaser-Lichtleiter bspw. mit 3 mm, 5mm oder 8 mm zur Führung des Lichtes an das zu beleuchtende Objekt verwendet. Der durch die oben beschriebene bauliche Ausbildung der Spiegellampe entstehende dunkle zentrale Fleck tritt am Ausgang des Lichtleiters um so deutlicher auf, je kleiner der aktive Bündeldurchmesser des faseroptischen Lichtleiters ist. Dieser nachteilige Effekt ist beispielsweise bei der Beleuchtung von mikroskopisch zu untersuchenden Objekten äußerst störend. Besonders nachteilig wirkt sich diese Helligkeitsverteilung auch bei Lichtleitern mit Faserbündeln auf, die lichteintrittsseitig gemeinsam und lichtaustrittsseitig getrennt, d.h. in mehrere Lichtleiter aufgeteilt geführt werden.

Zur Vermeidung des zentralen dunklen Flecks wurde bereits vorgeschlagen, die Spiegellampe schräg zur Achse der Lichteintrittsfläche des Lichtleiters anzuordnen. Diese Maßnahme bringt jedoch nur eine Reduzierung des zentralen dunklen Flecks. Auf Grund von Herstellungstoleranzen der Spiegellampe tritt aber auch bei Schrägstellung der Lampe gelegentlich der oben beschriebene dunkle Fleck auf. Für kleine aktive Durchmesser des Lichtleiters tritt in nachteiliger Weise auch bei Schrägstellung der Lampe nur eine geringe Verbesserung der Helligkeitsverteilung im zentralen Bereich der beleuchteten Fläche auf.

Fernerhin wurde bereits vorgeschlagen zur Vermeidung des dunklen zentralen Flecks im Bereich zwischen Spiegellampe und Eintrittsfläche des Lichtleiters ein keilförmiges optisches Element anzuordnen. Durch diesen bekannten Vorschlag kann im zentralen Bereich die Helligkeitsverteilung verbessert werden, doch wird durch diese Maßnahme die mittlere Beleuchtungsstärke über die zu beleuchtende Fläche deutlich reduziert. Die Ursache für diesen nachteiligen Effekt liegt darin, daß durch keilförmige Elemente zwar einerseits Lichtintensität in den zentralen Winkelbereich transferiert wird, gleichzeitig jedoch dem Lichtleiter Licht in einem Winkelbereich angeboten wird, der bereits außerhalb dessen numerischer Apertur liegt und daher nicht weitergeleitet werden kann.

Relevanter Stand der Technik wird in den Dokumenten US-A-4721359 und US-A-4929070 offenbart.

Der Erfindung liegt vor allem die Aufgabe zu Grunde, die Nachteile des Standes der Technik zu vermeiden und somit bei einer eingangs beschriebenen Beleuchtungseinrichtung insbesondere durch Vermeidung des dunklen Flecks im mittleren Bereich der Beleuchtungsfläche eine optimale Helligkeitsverteilung in der beleuchteten Fläche zu erreichen. Für viele Anwendungen, beispielsweise in der Mikroskopie, ist es erforderlich, im zentralen Bereich der beleuchteten Fläche Licht zumindest gleicher Helligkeit wie in weiter außen liegenden Bereichen der beleuchteten Fläche verfügbar zu haben.

Gelöscht wird die Aufgabe durch eine Beleuchtungseinrichtung gemäß Anspruch 1.

Gemäß der Erfindung wird daher für ein optisches Element der eingangs beschriebenen Art vorgeschlagen, daß die optische Element eine erste rotationssymmetrische, kreisringförmige Zone mit geringer Krümmung vorweist, deren äußerer Ringdurchmesser größer und deren innerer Ringdurchmesser kleiner als der Durchmesser der Lichtaustrittfläche des faseroptischen Lichtleiters ist, eine zweite rotationssymmetrische Zone stärkerer Krümmung als die Krümmung der ersten Zone aufweist, wobei diese zweite Zone innerhalb des inneren Ringdurchmessers der ersten Zone angeordnet ist und diese beiden Zonen der Austrittfläche des Lichtleiters gegenüberliegend vorgesehen sind, und eine dritte Zone mit zu den Krümmungen der ersten und zweiten Zone unterschiedlicher Krümmung an der Lichtaustrittsseite des optischen Elements aufweist, wobei diese dritte Zone rotationssymmetrisch sowohl der zweiten Zone als auch in radialer Erstreckung zumindest teilweise der ersten Zone gegenüberliegt. Durch geeignete gewählte Dimensionierung der Zonen bzw. deren Krümmungen, Dicken und Durchmesser gelingt es einerseits Licht aus den intensitätsstärkeren Winkelbereichen nach der Lichtleiteraustrittsseite in achsnahe Raumwinkelbereiche nach dem optischen Element zu transferieren und andererseits den maximalen Raumwinkel des aus dem optischen Element austretenden Lichtkegels deutlich zu reduzieren. Die Abstrahlung des optischen Elements wird in vorteilhafter Weise derart beeinflußt, daß die vorbestimmte Helligkeitsverteilung in der zu beleuchtenden Fläche erreicht wird.

In weiterer Ausgestaltung der Erfindung wird vorgeschlagen, daß die zweite Zone eine konkave Linsenfläche und die dritte Zone eine konvexe Linsenfläche ist. Durch eine derartige Kombination von optisch wirksamen Zonen an beiden Seiten des optischen Elements wird die geringe Helligkeit im zentralen Bereich, der sogenannte dunkle Fleck, bereits durch diese einfache Ausgestaltung des optischen Elements vermieden.

Um das optische Element mit der Beleuchtungseinrichtung bzw. mit dem Lichtleiter insbesondere in einer vorbestimmten Position mechanisch verbinden zu können, wird in weiterer Ausgestaltung der Erfindung vorgeschlagen, daß am äußeren Rand des optischen Elements außerhalb der ersten Zone eine, vorzugsweise zylindrische, insbesondere von einen Zylinder ergebenden Zungen gebildete, sich in Richtung der Rotationsachse des optischen Elements erstreckende Wandung vorgesehen ist, die als Halteteil den Lichtleiter kraftschlüssig und lösbar umgreift.

Die Erfindung ist in der Zeichnung in einer Ausführungsform beispielsweise dargestellt.
- Fig. 1: zeigt das optische Element im Schnitt, und
- Fig. 2: zeigt ein Diagramm der mit dem erfindungsgemäßen optischen Element erzielten Helligkeitsverteilung, und
- Fig.: 3 zeigt eine Beleuchtungsmeßwerte-Tabelle.

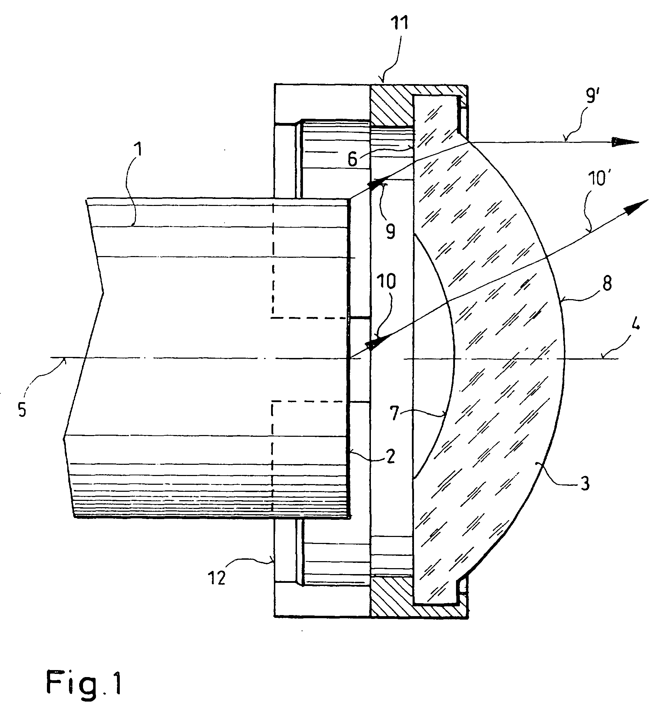

In Fig. 1 ist mit 1 ein faseroptischer Lichtleiter bezeichnet, der Teil einer nicht dargestellten Beleuchtungseinrichtung ist, die beispielsweise mit einer Halogen-Kaltlichtspiegellampe ausgerüstet ist. Eine derartige Spiegellampe hat eine Abstrahlcharakteristik, die im zentralen Bereich eine deutlich niedere Lichtstärke als im übrigen Bereich aufweist. Dies ist durch den Abschmelzzapfen des Lampenkolbens und durch die Lampensockeldurchführung im Reflektorspiegel bedingt. Das von der Spiegellampe emittierte Licht wird über den Lichtleiter 1 beispielsweise zur Beleuchtung eines nicht dargestellten Objektes in der Mikroskopie verwendet, wobei am Lichtleiteraustritt 2 im Prinzip die gleiche Charakteristik der ungleichmäßigen Helligkeitsverteilung auftritt. Der maximale Raumwinkel des abgestrahlten Lichts wird durch die numerische Apertur der Glasfaser des Lichtleiters exakt begrenzt.

Der dunkle zentrale Fleck im zu beleuchtenden Feld - bedingt durch die deutlich niedrigere Lichtstärke im zentralen Bereich - tritt um so deutlicher auf, je kleiner der aktive Bündeldurchmesser der Glasfasern des Lichtleiters ist. Für die Beleuchtung in der Mikroskopie werden Glasfaser-Lichtleiter verwendet, die einen aktiven Durchmesser von 3 bis 8 mm aufweisen. Dieser dunkle zentrale Fleck tritt auch auf, wenn ein Lichtleiter-Faserbündel lichtaustrittsseitig zur Beleuchtung eines Objektes in mehrere, beispielsweise zwei oder drei Faserbündel aufgeteilt wird.

Zur Vermeidung bzw. Eliminierung des zentralen dunklen Flecks ist das optische Element 3 gegenüber der Lichtaustrittsseite 2 bzw. im Strahlengang des faseroptischen Lichtleiters 1 angeordnet.

Das optische Element 3 ist als aus Glas oder lichtdurchlässigem Kunststoff gefertigter rotationssymmetrischer Lichtdom ausgebildet, wobei das optische Element 3 derart vor der Austrittsseite 2 des Lichtleiters 1 angeordnet ist, daß die Rotationsachse 4 des optischen Elements 3 senkrecht zur Austrittsfläche 2 des Lichtleiters 1 steht, bzw. mit der Achse 5 des Lichtleiters 1 fluchtet.

An der Lichteintrittsseite des optischen Elements 3 sind zwei optisch unterschiedlich wirksame Zonen 6, 7 vorgesehen und an der Lichtaustrittsseite des optischen Elements 3 ist die optisch wirksame Zone 8 vorgesehen. Die Zonen 6, 7 und 8 sind optisch wirksame Flächen, wobei die Zone 6 an der Lichteintrittsseite des optischen Elements 3 für die aus dem Lichtleiter 1 der Beleuchtungseinrichtung austretenden Randstrahlen 9, 9' eine kreisringförmige Planfläche ist. Die Randstrahlen 9' treten aus dem optischen Element 3 über die gekrümmte optisch wirksame Fläche der Zone 8 an der Lichtaustrittsseite des optischen Elements 3 aus.

Somit ist für den Fachmann ersichtlich, daß durch entsprechende Wahl der Brechkraft, d.h. der Krümmungen, Dicken, des Materials etc., der drei Zonen, die im allgemeinen unterschiedliche Krümmungen haben werden, eine jeweils gewünschte Helligkeitsverteilung erreicht werden kann. Denn durch rechnerische Bestimmung bzw. Dimensionierung der Krümmungen, Dicken und Durchmesser des optischen Elements 3 kann Licht aus den intensitätsstärkeren Winkelbereichen nach dem Lichtleiteraustritt in achsnahe Winkelbereiche nach dem optischen Element 3 transferiert werden, wie dies der gezeichnete Strahlenverlauf 9-9' darstellt. Andererseits wird durch Zusammenwirkung der gekrümmten Fläche der Zone 7 mit der Zone 8, die ebenfalls gekrümmt ausgebildet ist, erreicht, daß der maximale Raumwinkel des aus dem optischen Element austretenden Lichtkegels deutlich reduziert ist, wie dies der Strahlenverlauf 10-10' veranschaulicht. Aus diesem Weg der austretenden Strahlen 9', 10' ist auch ersichtlich, daß es gerade zur Vermeidung des dunklen Fleckes zweckmäßig ist, wenn die Brechkraft von der äußeren Zone 6 gegen den Bereich der Drehachsen 4 und 5 abnimmt.

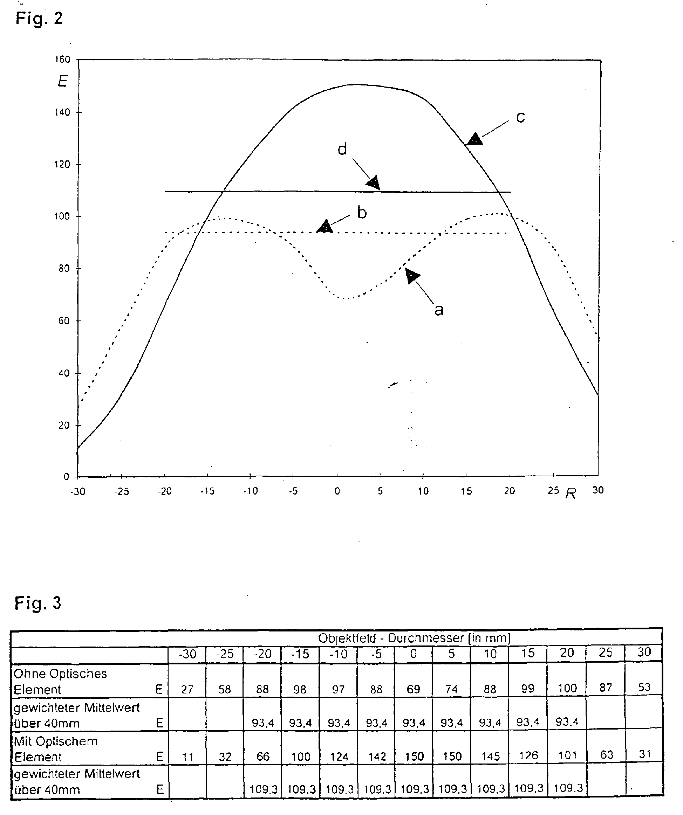

In Fig. 2 ist ein Diagramm dargestellt, daß den Effekt des optischen Elements 3 im Vergleich zur Abstrahlung des Lichtleiters 1 ohne vorgesetztem optischen Element 3 graphisch veranschaulicht. In diesem Diagramm sind die relativen Beleuchtungsmesswerte E bezogen auf Radien R des beleuchteten Objektfeldes in Kurvenform dargestellt. Hiebei veranschaulicht Kurve a die relativen Beleuchtungsmesswerte ohne optischem Element, Kurve b den gewichteten relativen Beleuchtungsmittelwert über 40 mm ohne optischem Element, Kurve c die relativen Beleuchtungsmesswerte bei Verwendung des optischen Elements 3 und Kurve d den gewichteten Beleuchtungsmittelwert über 40 mm bei Verwendung des optischen Elements 3.

Diese Kurven a bis d sind durch die in Figur 3 tabellarisch aufgelisteten Meßwerte der Beleuchtungsstärke definiert. Für diese Messungen wurde ein Lichtleiter mit einem aktiven Durchmesser von 5 mm verwendet. Die Relativmessung der Beleuchtungsstärken erfolgte in einem Abstand von 60 mm. Die lichtsensitive Meßfläche des verwendeten Photometers hatte einen Durchmesser von 2 mm, die Messungen wurden in einem Meßbereich von Radius R=30 mm durchgeführt, wobei die Auswertung über einen Radius r=20 mm durchgeführt wurde.

Aus dem Diagramm gemäß Fig. 2 ist bei Betrachtung der Kurve a deutlich der zentrale dunkle Bereich bei Nichtverwendung des optischen Elements 3 ersichtlich. Wird das optische Element 3 wie in Fig. 1 dargestellt angeordnet, so ist bei Betrachtung der Kurve c deutlich zu erkennen, daß der zentrale dunkle Bereich nicht mehr vorhanden ist. Darüber hinaus ist der gewichtete Mittelwert der Beleuchtungsstärke gemäß Kurve d wesentlich höher als ohne Anordnung des optischen Elements 3 (Kurve b).

Die Erfindung ist auf die oben beschriebene Ausführungsform nicht beschränkt. In Abhängigkeit von der Abstrahlcharakteristik der Lampe und/oder des Lichtleiteraustritts kann es zweckmäßig sein, die optisch wirksamen Zonen des Elements 3 anders als beschrieben auszugestalten. Es kann auch durchaus zweckmäßig sein, nicht nur an der Lichteintrittsseite des optischen Elements 3 mehrere unterschiedlich wirksame Zonen sondern auch an der Lichtaustrittsseite des optischen Elements 3 mehrere unterschiedlich wirksame Zonen vorzusehen. Anstelle der kreisringförmigen Planfläche der Zone 6 kann auch in diesem Bereich eine gekrümmte Fläche vorgesehen werden, um die Abstrahlcharakteristik gemäß einer speziellen Aufgabenstellung zu verändern.

Weiters kann je nach geforderter Helligkeitsverteilung im beleuchteten Objektfeld ein kontinuierlicher oder diskontinuierlicher Übergang benachbarter optisch wirksamer Zonen gewählt werden. Diesbezüglich zeigt der obere Teil der Fig. 1 einen diskontinuierlichen, d.h. plötzlichen und unstetigen, Übergang von Zone 7 zu Zone 6, wogegen der untere Teil der Figur einen kontinuierlichen oder stetigen Übergang 7' veranschaulicht.

Zur Befestigung des optischen Elements 3 am Lichtleiter 1 können am äußeren Rand des optischen Elements 3 beispielsweise sich in Richtung der Rotationsachse erstreckende zylindrische bzw. zungenartige Wandabschnitte 11 vorgesehen sein, die vorzugsweiswe einstückig mit dem optischen Element 3 ausgebildet sind und jedenfalls ein hülsenartiges Aufstecken des optischen Elements 3 auf eine Fassung 12 für den Lichtleiter 1 ermöglichen. Hiebei können an der Innenfläche der Wandung 11 und/oder der Fassung 12 ein oder mehrere Rastvorrichtungen ausgebildet sein, die eine fixe, aber lösbare Befestigung des optischen Elements 3 am Lichtleiter 1 oder an dessen Mantel ermöglichen. Die Streifen 11 sind zweckmäßig in gleichen Winkelabständen über den Umfang des optischen Elementes 3 verteilt und ermöglichen so ein elastisches Aufschnappen auf die Fassung 12. Alternativ könnte natürlich eine volle Zylinderwand verwendet werden.

Das optische Element 3 kann auch aus Farbglas oder dgl. hergestellt sein, falls für bestimmte Anwendungen in der Mikroskope, Materialuntersuchung od.dgl. der Einsatz von Farblicht erforderlich ist. Anstelle der Ausbildung des optischen Elements 3 als Dom, kann auch jede andere geeignete konstruktive Ausbildung bzw. Gestaltung gewählt werden.

Vor allem aus Kunststoff hergestellte optische Elemente können in einfacher Weise im Spritzgußverfahren hergestellt werden, wobei die Anordnung bzw. Ausbildung von asphärisch gekrümmten Zonen einfach herstellbar ist.

## Patentansprüche

1. Beleuchtungseinrichtung mit einer Lichtaustrittsseite, an welcher
A) ein faseroptischer Lichtleiter (1) mit einer Lichtaustrittsfläche (2) an der Lichteintrittsseite eines optischen Elements (3) vorgesehen ist;
B) eine Lichtquelle zur Zufuhr von Licht zum Lichtleiter (1); und
C) wobei das optische Element (3) mit folgenden Merkmalen ausgestattet ist:
a) an der Lichteintrittsseite des optischen Elements (3) besitzt es eine erste rotationssymmetrische, kreisringförmige Flächenzone (6) mit geringer Krümmung, deren äußerer Ringdurchmesser dazu bestimmt ist, über den Durchmesser der Lichtaustrittsfläche (2) des faseroptischen Lichtleiters (1) hinauszuragen und deren äußerer Ringdurchmesser größer und deren innerer Ringdurchmesser kleiner als der Durchmesser der Lichtaustrittsfläche (2) des faseroptischen Lichtleiters (1) ist;
b) und ebenfalls an derLichteintrittsseite des optischen Elements (3) ist eine zweite rotationssymmetrische Flächenzone (7) stärkerer Krümmung als die Krümmung der ersten Flächenzone (6) vorgesehen, die innerhalb des Ringdurchmessers der ersten Flächenzone (6) angeordnet ist; wogegen
c) eine dritte Flächenzone (8) mit zu den Krümmungen der ersten und zweiten Flächenzone (6 bzw. 7) unterschiedlicher Krümmung an der Lichtaustrittseite des optischen Elementes (3) vorgesehen ist, welche bezüglich der optischen Achse (4) rotationssymmetrisch sowohl der zweiten Flächenzone (7) als auch in radialer Erstreckung zumindest teilweise der ersten Flächenzone (6) gegenüberliegt;
**dadurch gekennzeichnet, daß**
B) die Lichtquelle eine Kaltlichtspiegellampe ist; und
C) die, den Krümmungen sowohl der zweiten Flächenzone (7) als auch in radialer Erstreckung zumindest teilweise der ersten Flächenzone (6) gegenüberliegende dritte Flächenzone (8) eine konvexe Linsenfläche derart ist, daß sie zusammen mit der ersten Flächenzone (6) und mit der zweiten Flächenzone eine Positivlinse darstellt, deren Brechkraft¹⁾ von der äußeren ersten Flächenzone (6) gegen den Bereich der Achsen (4, 5) abnimmt.

2. Beleuchtungseinrichtung nach Anspruch 1, **dadurch gekennzeichnet, daß** am äußeren Rand des optischen Elementes (3) außerhalb der ersten Flächenzone (6) wenigstens eine, vorzugsweise zylindrische, sich in Richtung der Rotationsachse (4) des optischen Elementes (3) erstreckende Wandung bzw. mehrere zungenartige Wandungsstreifen (11) vorgesehen ist bzw. sind, die als Halteteil, zum kraftschlüssigen und lösbaren Umgreifen des Lichtleiters (1), vorgesehen sind.

3. Beleuchtungseinrichtung nach Anspruch 1 oder 2, **dadurch gekennzeichnet, daß** die Brechkraft des optischen Elements (3) von der ersten Flächenzone (6) gegen den Bereich der Achse (4) hin abnimmt.

4. Beleuchtungseinrichtung nach einem der vorhergehenden Ansprüche, **dadurch gekennzeichnet, daß** die zentralen zweite und dritte Flächenzonen (7, 8) des optischen Elements (3) in gleicher Richtung gekrümmt sind, so daß die dritte Flächenzone (8) konvex, die zweite (7) konkav ist.

## Claims

1. Lighting device with a light output side, on which
A) a fibre optic light guide (1) with a light output surface (2) on the light input side of an optical element (3) is provided;
B) a light source to supply light to the light guide (1); and
C) in which the optical element (3) is provided with the following features:
a) on the light input side of the optical element (3) it has a first rotation symmetrical, circular surface zone (6) with slight curvature, of which outer ring diameter is intended to protrude over the diameter of the light output surface (2) of the fibre optic light guide (1) and of which outer ring diameter is greater and of which inner ring diameter is smaller than the diameter of the light output surface (2) of the fibre optic light guide (1);
b) and likewise on the light input side of the optical element (3) a second rotation symmetrical surface zone (7) with a greater curvature than the curvature of the first surface zone (6) is provided, which is arranged within the ring diameter of the first surface zone (6), against which
c) a third surface zone (8) with a curvature differing from the curvatures of the first and second surface zones (6 and 7) is provided on the light output side of the optical element (3), which is rotation symmetrical with reference to the optical axis (4) as well as being opposite to the second surface zone (7) as well as to the first surface zone (6) at least partially in radial extension;
**characterised in that**
B¹) the light source is a fibre optic; and
C¹) the third surface zone (8), which is opposite to the curvatures of the second surface zone (7) as well as of the first surface zone (6) at least partially in radial extension is a convex lens surface in such a way that it forms a lens together with the first surface zone (6) and with the second surface zone, the converging power of which decreases from the outer first surface zone (6) towards the area of the axes (4, 5) and the light is transferred from the higher intensity angular ranges to the paraxial angular ranges.

2. Lighting device according to claim 1, **characterised in that** on the outer edge of the optical element (3) outside the first surface zone (6) at least one, preferably cylindrical wall extending in the direction of the axis of rotation (4) of the optical element (3) or several tongue-like wall strips (11) is or are provided, which are provided as a holding part to encompass the light guide (1) non-positively and detachably.

3. Lighting device according to claim 1 or 2, **characterised in that** the converging power of the optical element (3) decreases from the outer first surface zone (6) towards the area of the axes (4).

4. Use of an optical element, in which the optical element has an outer, circular surface zone with a slight curvature and an outer and an inner ring diameter and an inner, second rotation symmetrical surface zone on one side and a third surface zone, which is opposite to the second as well as the first surface zone, in which the surface zones have such curvatures, thicknesses and diameters that the light from the higher intensity angular ranges is transferred to the paraxial solid angle ranges in a lighting device according to one of the preceding claims.

## Revendications

1. Dispositif d'éclairage, comprenant un côté de sortie de lumière sur lequel :
(A) un guide d'ondes optiques à fibres optiques (1) muni d'une surface de sortie de lumière (2) est prévu sur le côté d'entrée de lumière d'un élément optique (3) ;
(B) une source de lumière est prévue pour l'apport de lumière vers le guide d'ondes optiques (1) ; et
(C) dans lequel l'élément optique (3) est équipé des caractéristiques suivantes :
(a) il possède sur le côté d'entrée de lumière de l'élément optique (3) une première zone surfacique (6) à symétrie de révolution et de forme annulaire, présentant une faible courbure et dont le diamètre d'anneau extérieur est destiné à dépasser au-delà du diamètre de la surface de sortie de lumière (2) du guide d'ondes optiques à fibres optiques (1), et dont le diamètre d'anneau extérieur est plus grand et dont le diamètre d'anneau intérieur est plus petit que le diamètre de la surface de sortie de lumière (2) du guide d'ondes optiques à fibres optiques (1) ; et
(b) et une seconde zone surfacique (7) à symétrie de révolution et de courbure plus importante que la courbure de la première zone surfacique (6), laquelle est agencée à l'intérieur du diamètre d'anneau de la première zone surfacique (6), est prévue également sur le côté d'entrée de lumière de l'élément optique (3) ; à l'encontre de quoi
(c) une troisième zone surfacique (8) présentant une courbure qui diffère des courbures de la première et de la seconde zone surfacique (6 ou 7) est prévue sur le côté de sortie de lumière de l'élément optique (3), laquelle, par rapport à l'axe optique (4), est placée aussi bien à l'opposé de la seconde zone surfacique (7) avec symétrie de révolution qu'à l'opposé de la première zone surfacique (6) au moins partiellement dans l'extension radiale ;
**caractérisé en ce que** :
(B) la source de lumière est une lampe de miroir à lumière froide ; et
(c) la troisième zone surfacique (8), placée à l'opposé des courbures, aussi bien de la seconde zone surfacique (7) que de la première zone surfacique (6) au moins partiellement dans l'extension radiale, est une surface de lentille convexe de telle sorte qu'elle représente conjointement avec la première zone surfacique (6) et avec la seconde zone surfacique une lentille dont le pouvoir réfringent diminue depuis la première zone surfacique extérieure (6) à l'encontre de la région des axes (4, 5), et la lumière depuis les régions angulaires à plus forte intensité est transférée dans des régions angulaires proches des axes.

2. Dispositif d'éclairage selon la revendication 1, **caractérisé en ce qu'**au moins une paroi de préférence cylindrique et s'étendant en direction de l'axe de rotation (4) de l'élément optique (3), ou plusieurs bandes de paroi (11) en forme de languette, est (sont) prévue(s) sur le bord extérieur de l'élément optique (3), en dehors de la première zone surfacique (6), laquelle (lesquelles) est (sont) prévue(s) comme pièce(s) de maintien pour envelopper avec coopération de forces et de manière détachable le guide d'ondes optiques (1).

3. Dispositif d'éclairage selon l'une ou l'autre des revendications 1 et 2, **caractérisé en ce que** le pouvoir réfringent de l'élément optique (3) diminue depuis la première zone surfacique (6) à l'encontre de la région de l'axe (4).

4. Utilisation d'un élément optique, pendant laquelle :
- l'élément optique présente une zone surfacique extérieure de forme annulaire et de faible courbure, et un diamètre annulaire extérieur et intérieur, et une seconde zone surfacique intérieure à symétrie de révolution, sur un côté, et une troisième zone surfacique qui est placée à l'opposé aussi bien de la seconde que de la première zone surfacique ; et
- les zones surfaciques possèdent de telles courbures, de telles épaisseurs et de tels diamètres que la lumière est transférée des régions angulaires à plus forte intensité jusque depuis les régions angulaires de l'espace proches des axes, jusque dans un dispositif d'éclairage selon l'une des revendications précédentes.
